(19) Europäisches Patentamt
European Patent Office
Office européen des brevets

(11) **EP 2 164 685 B1**

(12) **FASCICULE DE BREVET EUROPEEN**

(45) Date de publication et mention de la délivrance du brevet:
**02.03.2011 Bulletin 2011/09**

(51) Int Cl.:
**B25J 13/08** *(2006.01)* **B25J 15/00** *(2006.01)*
**B25J 15/02** *(2006.01)*

(21) Numéro de dépôt: **08761296.6**

(22) Date de dépôt: **23.06.2008**

(86) Numéro de dépôt international:
**PCT/EP2008/057935**

(87) Numéro de publication internationale:
**WO 2009/000795 (31.12.2008 Gazette 2009/01)**

(54) **PINCE POUR ROBOT MANIPULATEUR A PRECISION DE SERRAGE AMELIOREE ET ROBOT MANIPULATEUR COMPORTANT AU MOINS UNE TELLE PINCE**

KLEMME FÜR HANDHABUNGSROBOTER MIT VERBESSERTER GREIFGENAUIGKEIT UND MINDESTENS EINE SOLCHE KLEMME UMFASSENDER HANDHABUNGSROBOTER

CLAMP FOR MANIPULATING ROBOT WITH ENHANCED GRIPPING ACCURACY AND MANIPULATING ROBOT COMPRISING AT LEAST ONE SUCH CLAMP

(84) Etats contractants désignés:
**AT BE BG CH CY CZ DE DK EE ES FI GB GR HR HU IE IS IT LI LT LU LV MC MT NL NO PL PT RO SE SI SK TR**

(30) Priorité: **25.06.2007 FR 0756006**

(43) Date de publication de la demande:
**24.03.2010 Bulletin 2010/12**

(73) Titulaire: **Commissariat à l'Énergie Atomique et aux Énergies Alternatives 75015 Paris (FR)**

(72) Inventeur: **JOUAN DE KERVANOAEL, Tanguy F-78640 Neauphle Le Chateau (FR)**

(74) Mandataire: **Ilgart, Jean-Christophe BREVALEX 95 rue d'Amsterdam 75378 Paris Cedex 8 (FR)**

(56) Documents cités:
**EP-A- 0 441 060        EP-A- 0 974 421
DE-A1- 19 644 502     DE-C1- 19 806 231
JP-A- 9 070 786         JP-A- 01 210 285
JP-A- 10 151 595        JP-A- 61 050 030
US-A- 4 579 380**

EP 2 164 685 B1

# EP 2 164 685 B1

## Description

### DOMAINE TECHNIQUE ET ART ANTÉRIEUR

La présente invention se rapporte à une pince pour robot manipulateur ayant une précision de serrage améliorée et à un robot manipulateur comportant au moins une telle pince.

Les robots manipulateurs sont de plus en plus utilisés dans l'industrie et dans la vie courante, notamment pour l'aide aux handicapés.

Ces robots manipulateurs comportent au moins une pince de préhension montée articulée à l'extrémité d'un bras, lui-même articulé sur un châssis.

La plupart des pinces de robot sont des pinces mécaniques ou électromécaniques, ne comportant pas de capteur d'effort. Le contrôle d'effort est effectué par retour d'effort direct dans le cas d'un télémanipulateur mécanique, ou par contrôle du courant dans les moteurs pour doser le couple de serrage ou au moyen d'un potentiomètre qui mesure un décalage de position des membres de la pince par rapport à une consigne, du fait d'une déformation élastique due à l'effort de serrage.

Certaines pinces sont équipées de détecteurs de contact, afin de détecter le moment où la pince entre en contact avec l'objet, et de moyens de mesure d'effort pour maîtriser l'effort de serrage de manière à éviter de déformer l'objet saisi.

Le document EP 0974 421 décrit une pince de préhension pour un bras articulé de robot, comportant un détecteur de contact formé par un poussoir monté en translation dans un mors, le contact est détecté au moyen d'un contact électrique, cependant ce capteur ne mesure par l'intensité de l'effort de contact, par conséquent il ne permet pas de gérer l'effort de serrage. Le mors est monté sur un parallélogramme destiné à assurer un déplacement du mors dans des plans successifs parallèles, celui-ci ne jouant aucun rôle dans la détection du contact et de mesure de cet effort.

Il est également connu une pince comportant des cellules remplies de fluide compressible, la mesure de la déformation des cellules permet de fixer la force de serrage nécessaire à une préhension sûre d'un objet, un capteur de type capteur de force de cisaillement est utilisé. Cette pince requiert un capteur de contact supplémentaire afin de déterminer quand la pince vient en contact avec l'objet.

Il est également connu d'utiliser un capteur de compression mono-axial comme détecteur de contact placé directement derrière un téton coulissant dans un des mors de la pince. Le capteur est monté dans le mors de manière à ce que l'axe du capteur soit disposé sensiblement orthogonalement par rapport à la surface du mors. Cependant celui-ci ne peut mesurer que les efforts orientés selon une direction orthogonale à la zone de compression du capteur. Par conséquent, la mesure n'est fiable que dans les cas où la force appliquée par l'objet à saisir lorsque le mors vient en contact avec celui-ci, est coaxial à l'axe du capteur.

Ce capteur peut certes tolérer un léger désalignement de la force appliquée, la force se décompose alors en une composante selon l'axe du capteur et selon un axe orthogonal à cet axe. Si le désalignement est trop important, il en résulte une erreur de mesure importante et un risque de détérioration du capteur, qui n'est pas conçu pour supporter des efforts radiaux de la composante orthogonale.

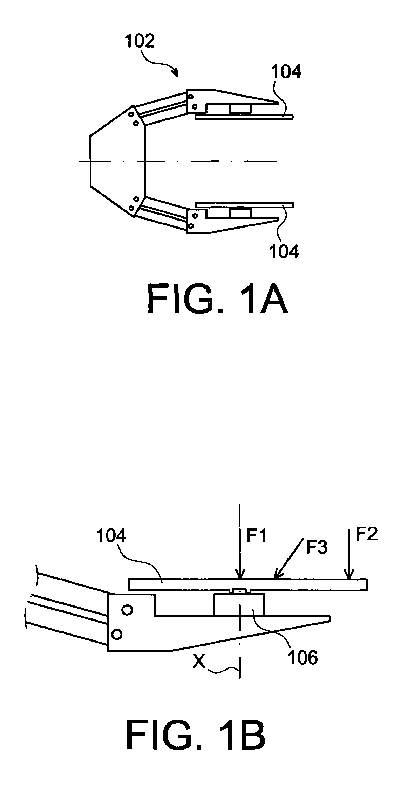

Sur les figures 1A et 1B, on peut voir une pince 102, dans laquelle les mors 104 sont montés sur le capteur 106, ce montage ne convient que si l'effort F1 est orthogonal aux mors 104 et passe par l'axe X du capteur 106. Dans tous les autres cas, les efforts F2 et F3 appliqués aux mors 106 engendrent un moment de flexion sur le capteur qui peut être détérioré.

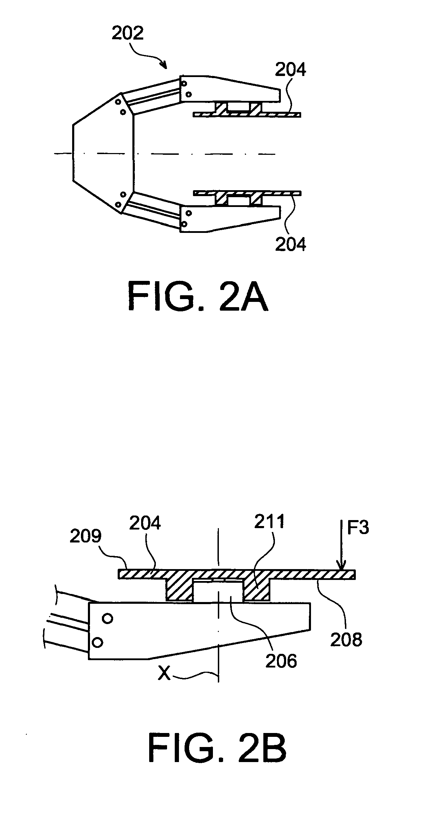

Pour éviter que le capteur ne reprenne des efforts ou moments parasites, il existe une pince 202 dont les mors 204 sont guidés sur le capteur 206, comme cela est représenté sur les figures 2A et 2B. Les mors comportent sur la face 208 opposée à la face 209 destinée à venir en contact avec l'objet, un guide 211 d'axe orthogonal à la surface du mors 204 et apte à coulisser autour du corps du capteur 206, de manière à ce que la face 209 du mors 204 se déplace orthogonalement à l'axe X du capteur 206.

Ce montage supprime effectivement les efforts parasites sur la partie sensible du capteur, cependant le capteur ne mesure que la composante selon l'axe du capteur, ce qui nuit à la précision et à la sensibilité de la mesure. En outre, ce guidage génère des frottements parasites entre le mors et le capteur qui réduisent d'autant la sensibilité de mesure.

Par ailleurs, si une force F3 est exercée, celle-ci peut conduire à un arc-boutement bloquant la translation et empêchant le fonctionnement du capteur 206.

Une solution pour supprimer ou pour le moins réduire ces efforts serait de prévoir un guidage de type glissière à billes entre le corps du capteur et le mors, mais ce montage est complexe et très encombrant par rapport au volume d'une pince.

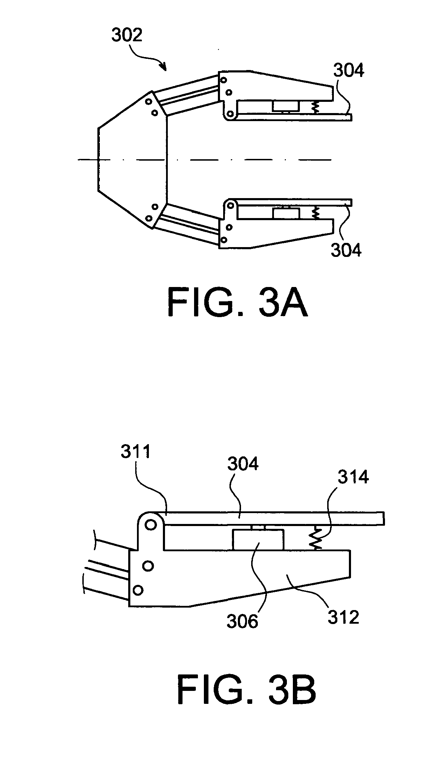

Sur les figures 3A et 3B, on peut voir un autre type de pince 302 de l'état de la technique, dans laquelle chacun des deux mors 304 est monté pivotant par une extrémité 311 sur le supports de mors 312, le capteur 306 étant toujours interposé entre le support de mors 312 et le mors 304.

Dans ce montage, les frottements sont fortement réduits, par ailleurs un ressort 314 est prévu pour rattraper le jeu dans l'articulation.

Le capteur présente une bonne sensibilité, cependant celle-ci dépend du point de contact de l'objet sur les mors, en outre la composante radiale de l'effort est reprise par l'articulation et non par le capteur, la précision est donc faible dans le cas de forces inclinées par rapport à l'axe du capteur.

Le document JP 01210285 décrit une pince pour saisir des objets, cette pince comportant deux membres portant chacun un mors et un support de mors reliés par une liaison déformable constituée par des lames ressorts interposées entre le mors et le membre. Des jauges de contrainte sont prévues au niveau des lames ressorts, et des jauges de contrainte sont prévues sur les membres eux-mêmes, ces jauges sont sollicitées en flexion. Les jauges permettent de détecter la valeur de la force nécessaire pour maintenir correctement l'objet saisi. La sensibilité de la pince dépend du point de contact.

Le but de la présente invention est par conséquent de réaliser une pince pour robot manipulateur offrant une grande sensibilité de détection du contact avec l'objet, une grande précision de mesure de l'effort de contact quelle que soit la direction de l'effort par rapport aux mors de la pince et une bonne répétabilité de détection et de mesure.

C'est également un but de la présente invention de réaliser une pince pour robot manipulateur équipé d'un dispositif de détection d'un contact et de mesure de l'effort de contact, de fabrication simple et de coût de revient réduit.

## EXPOSÉ DE L'INVENTION

Les buts précédemment énoncés sont atteints par une pince selon la revendication 1, comportant deux mors et un support de mors pour chacun des mors, au moins un capteur d'effort, et une liaison de type parallélogramme montée entre un support et un mors, le capteur étant disposé entre le support de mors et le mors, le capteur ayant un axe de compression coaxial à l'axe de serrage de la pince.

Ainsi, aucun moment de flexion n'est appliqué au capteur risquant de l'endommager et les frottements sont réduits, ce qui rend la mesure précise. Par ailleurs la position du point de contact entre le mors et l'objet en question n'a aucune influence sur la valeur de l'effort mesuré.

En d'autres termes, on prévoit des moyens aptes à guider le mors de manière à assurer un déplacement du mors dans des plans parallèles successifs évitant ainsi d'exercer un moment de flexion sur le capteur, tout en réduisant les frottements et aptes à rendre indépendants l'effort à mesurer et l'endroit où il s'exerce sur le mors.

Le dispositif de détection selon la présente invention assure donc d'une part la détection du contact du mors avec l'objet, et d'autre part la mesure de l'effort de serrage, cette mesure étant obtenue par la projection de l'effort de compression sur la direction du serrage de la pince. Cette mesure est alors indépendante de la direction de la force de compression.

L'utilisation d'un seul capteur pour détecter à la fois le contact et l'effort de contact permet de simplifier la pince, de réduire l'encombrement à l'intérieur de la pince et de réduire le coût de revient de la pince.

Le montage du mors sur un parallélogramme permet de reporter la résultante normale des efforts de contact au détecteur avec un seuil de détection identique et une sensibilité constante, il existe en effet une linéarité de la mesure de compression et donc du taux de serrage quel que soit le point de contact avec les mors, et quelle que soit la direction de l'effort.

Dans un premier mode de réalisation, le parallélogramme est réalisé au moyen de quatre biellettes reliées par des axes transversaux.

Dans un deuxième mode de réalisation particulièrement avantageux, le parallélogramme est réalisé d'une seule pièce, ce qui permet de supprimer les jeux au niveau des liaisons entre les biellettes, ainsi que les frottements.

La présente invention a alors principalement pour objet une pince pour robot manipulateur comportant deux membres articulés par une première extrémité, chaque membre comportant à une deuxième extrémité un support de mors et un mors destiné à venir en contact avec un objet, le mors étant sensiblement plan, un capteur d'effort disposé entre au moins un support de mors et un mors de manière à subir un effort lors du déplacement du mors, et une liaison parallélogramme déformable liant le mors au support de mors, le capteur étant orienté de manière à ce qu'un axe sensible du capteur soit orthogonal au plan du mors.

On entend par « axe sensible du capteur », l'axe de détection et de mesure du capteur, dans le cas d'un capteur de compression, c'est l'axe de compression, qui est orthogonal à la surface de compression.

Dans un mode de réalisation particulièrement avantageux, le parallélogramme est d'une seule pièce, ce qui permet d'éliminer les jeux et donc d'améliorer la précision de mesure.

On peut également prévoir de réaliser le support de mors et/ou un plateau formant la base du mors d'une seule pièce avec le parallélogramme, ce qui permet de simplifier la réalisation de la pince.

Le parallélogramme peut comporter des bielles parallèles articulées sur le support de mors et le mors.

Les bielles sont avantageusement en forme de lames reliées par leurs extrémités au support de mors et au mors, les extrémités des lames étant amincies pour permettre l'articulation par rapport au support de mors et au mors.

De manière avantageuse, le capteur est préchargé, ce qui permet de supprimer l'incertitude au zéro du capteur.

Dans un exemple, le capteur est en contact avec le parallélogramme et la précharge est obtenue au moyen d'un ressort tendu entre une bielle du parallélogramme et le support de mors. Dans un autre exemple, le capteur est en contact direct avec le mors et la précharge est obtenue au moyen d'une vis de pression montée dans le mors en regard du capteur.

On peut prévoir une bille interposée entre le capteur et le mors pour supprimer les frottements latéraux. Cette bille peut être montée dans le mors en contact avec la vis de pression.

Avantageusement, la bille est logée dans une bague en mousse s'interposant entre la bille et le mors, pour éviter qu'elle ne se coince.

Le capteur peut être formé par un capteur de compression mono-axial à jauges de contrainte, qui est compact. On peut également utiliser un capteur du type capacitif, magnétique ou piézoélectrique.

La pince peut avantageusement comporter au moins une caméra et des moyens pour détecter la présence de l'objet entre les mors, formés par exemple par une diode électroluminescente émettrice fixée dans un mors et une diode électroluminescente réceptrice fixée dans l'autre mors en regard de la première diode. Cette pince offre alors une préhension de grande qualité.

Les deux mors peuvent montés sur des liaisons parallélogrammes, dans ce cas la détection et la mesure de l'effort sont encore améliorées.

La présente invention a également pour objet un robot manipulateur comportant au moins une pince selon la présente invention.

## BRÈVE DESCRIPTION DES DESSINS

La présente invention sera mieux comprise à l'aide de la description qui va suivre et des dessins annexés sur lesquels :

- les figures 1A à 3B sont des vues de côté d'exemples de pinces de l'état de la technique,
- la figure 4 est vue de côté d'un premier mode de réalisation d'une pince selon la présente invention,
- la figure 5 est une vue de détail de la figure 4 sur laquelle les efforts appliqués au mors sont représentés,
- la figure 6 est une vue agrandie de la figure 5,
- la figure 7 est une vue en perspective de la pince de la figure 4,
- la figure 8 est une vue de côté d'un détail de la figure 7 au niveau d'un mors,
- la figure 9 est une vue en perspective d'une pince selon un deuxième mode de réalisation de la présente invention,
- la figure 10 est une vue de détail de la figure 9 au niveau d'un mors,
- la figure 11 représente un montage selon la présente invention dans un état repos et dans un état déformé,
- la figure 12 est une vue de détail de figure 10.

## EXPOSÉ DÉTAILLÉ DE MODES DE RÉALISATION PARTICULIERS

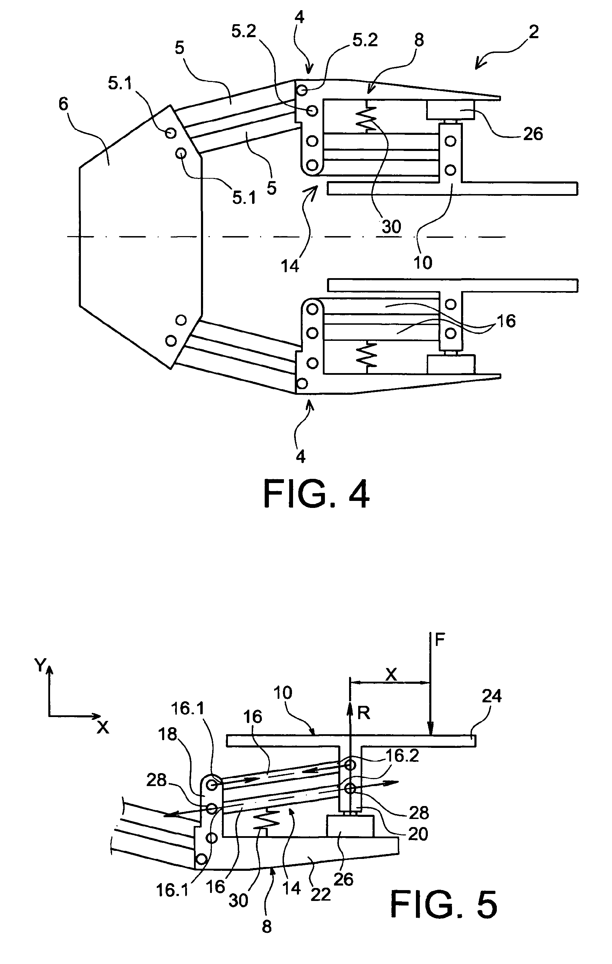

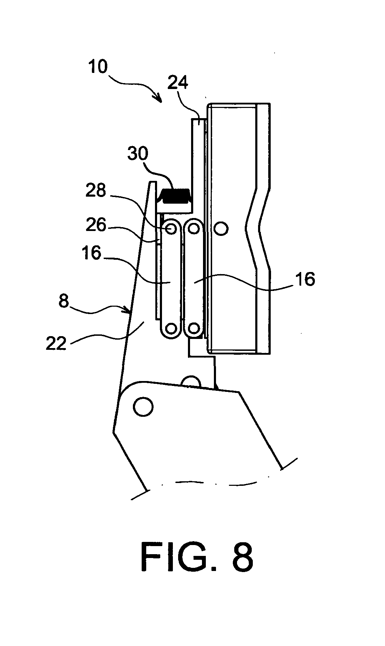

Sur les figures 4 à 9, on peut voir un premier mode de réalisation d'une pince 2 de la présente invention comportant deux membres 4 articulés sur un chape 6 par un première extrémité formant, à l'état repos, un angle et aptes à se rapprocher l'un de l'autre.

Les deux membres étant de réalisation similaire nous décrirons en détail un seul membre 4.

Dans l'exemple représenté, le membre 4 comporte deux bielles 5 articulées sur une chape 6 par une première extrémité longitudinale 5.1 et sur un support de mors 8 portant un mors 10 par une deuxième extrémité 5.2.

La bielle formée par le support de mors 8 entre les deux extrémités 5.2 des bielles 5 se déplace alors dans des plans successifs parallèles à la bielle reliant les deux extrémités 5.1 des bielles 5. Ainsi, en orientant de manière adéquate le mors par rapport au support de mors 8, on obtient un déplacement, plus particulièrement un rapprochement et un éloignement des deux mors 10 dans des plans parallèles.

On peut également prévoir d'utiliser des membres rigides simplement articulés sur la chape 6.

Selon la présente invention, le mors 10 est articulé sur le support de mors 8 au moyen d'un parallélogramme 14.

Le parallélogramme 14 comporte deux paires de bielles parallèles 16, mais une seule paire est visible. Chacune des bielles est liée en rotation par une première extrémité longitudinale 16.1 à un montant 18 du support de mors 8 et par une deuxième extrémité longitudinale 16.2 opposée à la première 16.1 à un montant 20 du mors 10, les montants 18 et 20 étant parallèles pour former le parallélogramme 14.

Dans la suite de la description nous désignerons, à des fins de simplification, cette liaison par parallélogramme, cependant les deux paires de bielles 16 et les montants 18, 20 définissent en fait un parallélépipède quelconque.

Dans l'exemple représenté, le support de mors 8 a la forme d'une équerre délimitée par le montant 18 et une base 22 orthogonale au montant 18, et le mors a, vu de côté, la forme d'un T le montant 18 formant le pied du T et un plateau 24 formant la tête du T, le plateau 24 étant destiné à venir en contact avec un objet à saisir (non représenté).

Dans la présente description, il n'est pas distingué la partie en contact avec le capteur et la partie destinée à venir en contact de l'objet, cet ensemble est désigné par « mors ».

Le membre 4 comporte également un capteur d'effort 26 disposé entre la base 22 et l'extrémité libre 18.1 du pied du mors 10. De manière plus générale, le capteur 26 est interposé entre le mors et le support de mors 8, de manière à ce que l'effort de contact entre le mors et l'objet lui soit appliqué.

De manière avantageuse, le capteur est un capteur de compression mono-axial à jauges de contrainte, le capteur est monté dans le support de mors 8 de manière à ce que son axe soit sensiblement orthogonal au plateau 24.

Ce capteur offre une grande sensibilité et une grande résolution. Par ailleurs il est de petite taille donc il est particulièrement adapté à sa mise en oeuvre à l'intérieur d'une pince. Il est bien entendu que tout autre type de capteur adapté à la mesure d'un effort peut être utilisé, par exemple un capteur de type capacitif, magnétique ou piézoélectrique.

A titre d'exemple, le capteur de compression peut présenter une étendue de mesure de 0N à 100N. Ce capteur est de très petite dimension avec un diamètre de 5 mm, et une hauteur 2.5mm, ce qui est particulièrement adapté à son installation dans le volume restreint des de la pince.

Le capteur peut comporter un module de traitement séparé qui peut être monté par exemple sur le support de mors ou sur le membre.

Sa raideur est $6,8.10^8$ N/m.

L'effort est lié au déplacement par la relation suivante :

$$F = K \times x, \ d'où \ x = F/K.$$

Ainsi, pour un effort F = 100N appliqué au capteur, $x = 1,6.10^{-7}$ m, soit 0,16 $\mu$m.

Le déplacement est donc très faible.

Les bielles 16 sont raccordées aux montants 18 et 20 au moyen d'axes 28 orthogonaux au plan du dessin.

Un moyen élastique 30 est avantageusement prévu pour exercer une précharge sur le capteur 26 afin de supprimer l'incertitude autour du zéro du capteur. Cette précharge est par exemple de l'ordre de 1 N dans le cas du capteur décrit précédemment.

Le moyen élastique 30 est monté en tension entre le parallélogramme 14 et le support de mors 8, plus particulièrement entre une bielle 16 et la base 22. Ce moyen élastique assure également la retenue du parallélogramme sur le support de mors 8.

Dans l'exemple représenté, le moyen élastique 30 est un ressort hélicoïdal.

De manière avantageuse, le ressort 30 applique une légère précharge au capteur de compression 26. Ainsi grâce à cette précharge, on supprime l'incertitude de mesure du capteur autour du zéro.

L'interposition d'une liaison en forme de parallélogramme permet d'obtenir la même sensibilité quel que soit le point de contact sur le plateau du mors.

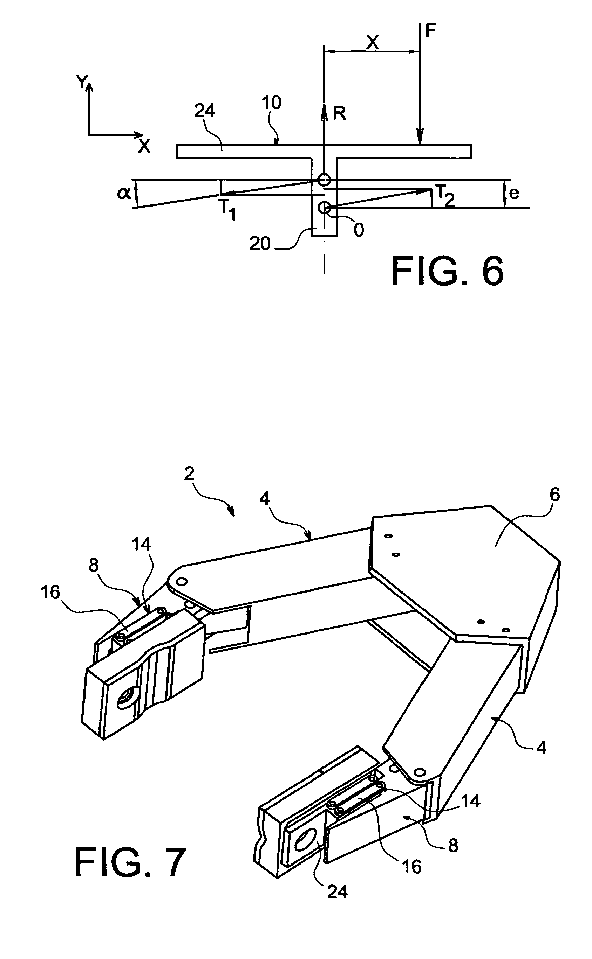

Sur les figures 5 et 6, est représenté un seul membre muni d'un mors 10 monté sur une liaison parallélogramme 14, les efforts auxquels est soumis le mors 10 étant représentés.

La force désignée F est la force de contact avec l'objet à saisir.

La force désignée R est la réaction mesurée par le capteur de compression 26.

Les forces désignées T1 et T2 sont les forces exercées au sein de la liaison.

x est l'abscisse du point où s'applique la force F sur le plateau 24 dans le repère XY dont l'origine est désignée O et prévue sur le pied du mors.

α est l'angle formé entre le plateau et les bielles 16.

e est la distance séparant les deux extrémités 16.2 des bielles 16.

Grâce à la présente invention, la valeur de R est égale à la valeur de F et ce indépendamment du point de contact.

En effet, en écrivant dans le repère XY les équations d'équilibre :

$$T2.\cos\alpha \ -T1.\cos\alpha = 0 \qquad\qquad (I)$$

$$R - F + T2.\sin\alpha - T1.\sin\alpha = 0 \qquad (II)$$

$$F \times x - T1.\sin\alpha \times e = 0 \qquad\qquad (III)$$

De l'équation (I), on déduit que T1 est égale à T2 et de l'équation (II) on déduit que R est égale à F quelque soit x.

Selon la présente invention, la déformation requise pour le parallélogramme est faible, en effet il suffit que sa déformation maximale corresponde à la déformation maximale du capteur 26 comprise par exemple entre 0,02 $\mu$m et 0,2 $\mu$m.

Dans l'exemple représenté, chaque membre 4 comporte un mors monté sur une liaison parallélogramme, cependant on pourrait prévoir d'avoir une pince avec un seul mors articulé sur un parallélogramme, l'autre mors étant monté rigidement sur le support de mors.

La pince est par exemple actionnée par un système de câbles, poulies, courroies et moteur électrique de type connu par l'homme du métier, ce système ne sera donc pas décrit en détail.

Ce premier mode donne satisfaction, cependant dans le cas de jeux importants au niveau des articulations des bielles entre elles, en particulier au niveau des axes, l'égalité entre la force de contact F et la réaction R quelle que soit la position du point de contact n'est plus exacte.

On peut prévoir de réduire ces jeux en ajustant précisément les axes dans les bielles, cependant de tels ajustements peuvent générer des couples de frottement sec, ce qui réduit d'autant la sensibilité du capteur de contact 26.

On peut alors prévoir d'utiliser des roulements à billes préchargés pour supprimer les jeux et les frottements.

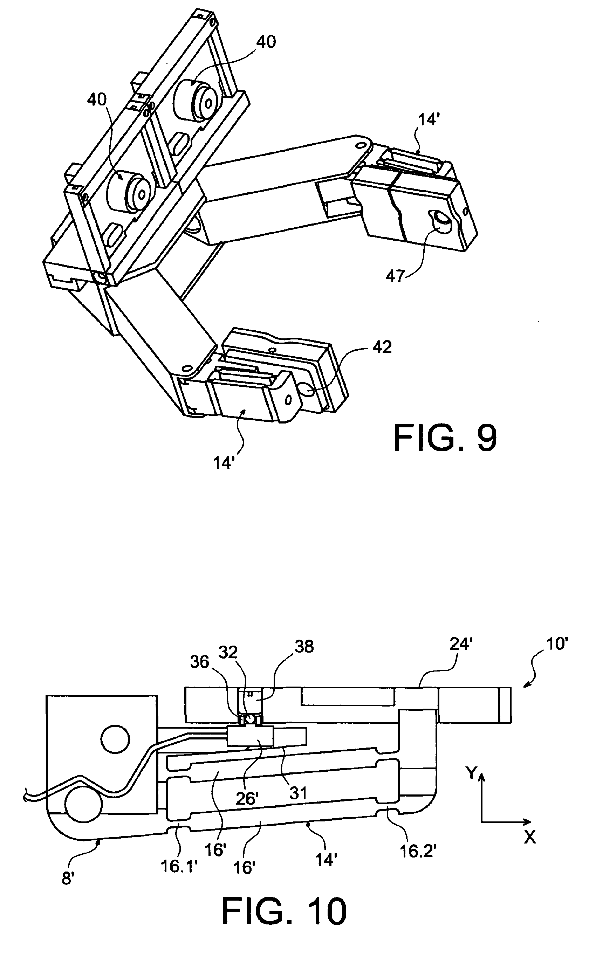

Selon un deuxième mode de réalisation représenté sur les figures 9 à 12, on prévoit une liaison parallélogramme dans laquelle les jeux et les frottements mentionnés ci-dessus ont été supprimés, rendant la mesure de contact encore plus sensible et plus fiable.

Selon ce deuxième mode de réalisation, on réalise une liaison parallélogramme 14' d'une seule pièce apte à se déformer, ainsi il n'existe pas de jeux au niveau des liaisons entre les bielles.

Dans ce deuxième mode de réalisation, on remplace les jeux et les frottements par une raideur dont on connaît la loi : F = Kx ou M = c$\theta$ ou K est la raideur de parallélogramme en N/m et c est la raideur angulaire exprimée en mN/rd.

Comme cela est particulièrement visible sur la figure 10, le capteur de contact 26', qui est avantageusement du type à mono-axe est monté dans le support de mors de manière à ce que son axe soit sensiblement orthogonal au plateau 24'. Dans l'exemple représenté, le support de mors 8' comporte une platine 31 en saillie du support de mors 8' parallèle au plateau 24'.

Le capteur 26' subit une force de pression appliquée directement par le plateau 24'.

Dans l'exemple représenté, le support de mors 8' est réalisé d'une seule pièce avec la liaison parallélogramme 14', le plateau 24' quant à lui, est rapporté sur la liaison parallélogramme 14'.

Le parallélogramme 14' et le support de mors sont par exemple réalisés en acier inoxydable, en alliage d'aluminium ou en tout autre matériau métallique. On peut même prévoir de les réaliser en matériau synthétique, par exemple en plastique, puisque la déformation requise est faible.

Dans le cas d'une pièce en métal, celle-ci peut être réalisée par usinage d'un bloc de métal.

Dans le cas d'une pièce en plastique, elle peut être réalisée directement par moulage, ce qui permet d'obtenir un coût de revient faible dans le cas d'une production en grande série.

Le choix du matériau dépend de la charge que la pince est destinée à porter.

Le capteur peut être disposé entre les pièces mobiles qui conservent leur direction et le bâti.

On peut également utiliser la diminution de la précharge comme indicateur d'un contact (ou collision) à l'extérieur des mors.

On pourrait envisager de réaliser une pièce monobloc ayant la configuration du premier mode de réalisation, le capteur 26 serait alors disposé de la même manière.

De même on pourrait réaliser la pince selon le premier mode de réalisation en reprenant la configuration du deuxième mode de réalisation.

On pourrait également prévoir de réaliser le plateau, le support de mors et la liaison d'une seule pièce, ou alors de réaliser uniquement la liaison parallélogramme d'une seule pièce, et de la fixer au support de mors et au plateau par exemple par soudage, par collage ou par un système vis-écrou.

Cette réalisation avantageuse en une seule pièce est particulièrement adaptée puisque, comme nous l'avons dit précédemment, la déformation requise est très faible et est, par exemple de l'ordre de 0,02 $\mu$m à 0,2 $\mu$m selon l'axe Y.

Le parallélogramme 14' d'une seule pièce comporte deux bielles 16' en forme de lame dont les extrémités 16.1', 16.2' se raccordant aux deux autres bielles parallèles sont amincies, afin d'assurer les liaisons pivot et permettre la déformation du parallélogramme.

Les bielles 16' en forme de lame sont avantageuses, puisqu'elles offrent à la fois une bonne rigidité en torsion du mors et une bonne souplesse en flexion au niveau des extrémités amincies.

On pourrait également prévoir des bielles en forme de barre de section circulaire ou carrée en adaptant leur section à l'effort de torsion à supporter.

Par ailleurs comme cela est particulièrement visible sur la figure 9, on prévoit des lames de grande largeur, une seule lame remplaçant alors deux bielles parallèles.

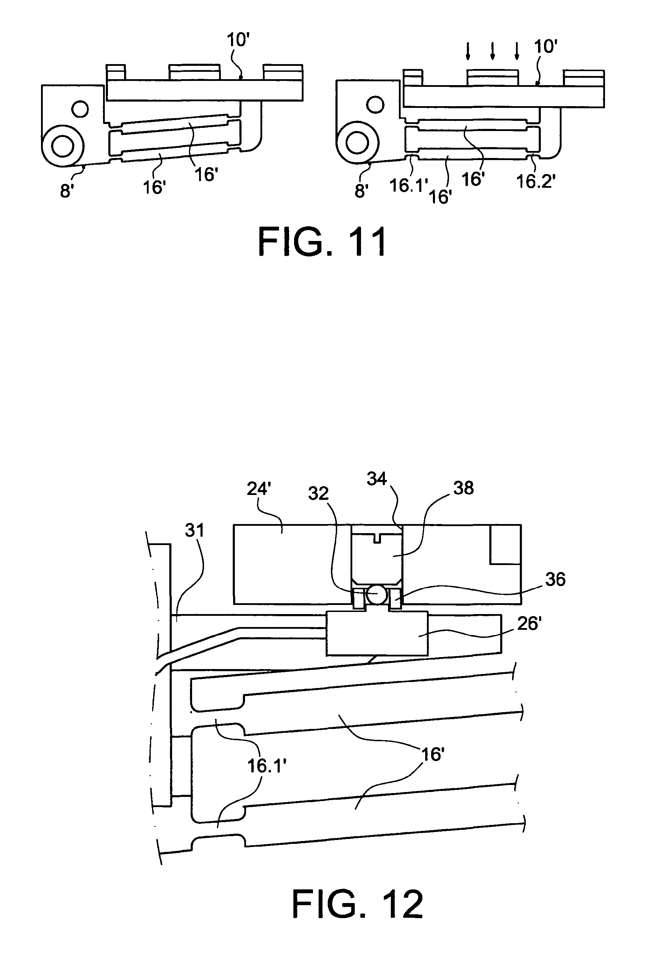

Sur la figure 11, on peut voir l'extrémité de la pince comportant le mors, la liaison parallélogramme 14' et le support de mors dans un état déformé correspondant à une mise en contact avec l'objet à saisir, le plateau conserve une position parallèle par rapport à sa position au repos

Un frottement entre le plateau et le capteur de contact du fait du déplacement du plateau selon l'axe X peut subvenir, cependant ce frottement ne réduit pas la sensibilité de la mesure puisque sa direction est orthogonale à la direction de l'effort de contact à mesurer qui, lui, est orienté selon l'axe Y.

On peut cependant prévoir une bille 32 de manière avantageuse, pour éviter tout risque d'apparition de frottement parasite entre le capteur de contact et le plateau. Le frottement est alors supprimé du fait du roulage de la bille. Dans l'exemple représenté, la bille est montée dans un alésage 34 du plateau d'axe Y.

On peut prévoir des moyens 36 pour éviter un blocage de la bille si elle venait en contact avec le bord de l'alésage, ces moyens 36 peuvent être formés par une rondelle de mousse élastique interposée entre la périphérie de la bille et la surface de l'alésage, ainsi la bille 32 ne vient pas en appui contre la surface de l'alésage 34 et ne peut donc pas se coincer selon l'axe X.

La bille et l'anneau peuvent également être prévus dans la premier mode de réalisation.

Comme dans le premier mode de réalisation, on prévoit de manière avantageuse d'appliquer une légère précharge au capteur de compression afin de supprimer l'incertitude de mesure au niveau du zéro. Pour un capteur ayant une étendue de mesure de 100N, la précharge a un ordre de grandeur compris entre 1N et 10N.

Cette légère précharge est obtenue naturellement par l'élasticité du parallélogramme en ajustant la position du plateau par rapport au parallélogramme.

On prévoit une vis de pression 38 vissée dans le plateau du côté de face de préhension du mors pour appliquer la précharge, la vis de pression 38 est plus ou moins vissée dans l'alésage 34 pour augmenter ou réduire le précharge du capteur de compression. Cette réalisation est particulièrement intéressante dans le cas d'un ensemble support de mors, mors et parallélogramme monobloc.

Il est à noter que la valeur de la précharge est prise en compte pour la mesure de l'effort et est déduite de la valeur mesurée.

Comme dans le premier mode de réalisation, le deuxième mode de réalisation a été décrit avec deux mors montés sur un parallélogramme déformable, ce qui assure une saisie optimale de l'objet et de son serrage, mais il est bien entendu que l'on peut prévoir de ne monter qu'un seul mors sur un tel parallélogramme.

La présente invention présente l'avantage de permettre l'utilisation d'un capteur de compression standard.

Par ailleurs, quelles que soient la position et la direction de l'effort de contact, l'effort est toujours appliqué dans l'axe du capteur, il n'y a donc pas de risque de détérioration de celui-ci par application d'un effort transverse.

Seule la composante normale de l'effort appliqué est mesurée par le capteur et non l'effort total ramené dans l'axe du capteur. C'est l'effort normal de serrage de la pince entre l'objet et le mors. Les efforts tangentiels sont repris par la traction et la compression des bielles. Si seul un effort parallèle au mors est appliqué, le capteur d'effort ne mesure aucun effort.

Par ailleurs, comme nous l'avons déjà écrit, la détection de l'effort et sa mesure sont indépendantes du point de contact.

En outre, l'incertitude de mesure autour de zéro peut être avantageusement supprimée par la précharge appliquée au capteur de contact.

Le deuxième mode de réalisation présente par ailleurs une grande résolution qui est égale à celle du capteur de compression et donc une grande sensibilité puisque les jeux sont supprimés ainsi que pratiquement tous les frottements.

De plus, il est de fabrication très simple, puisqu'il requiert peu de pièces. On peut même envisager de réaliser le mors, le support de mors et le parallélogramme d'une seule pièce.

Ce capteur permet également de contrôler la force de serrage de la pince.

La pince ainsi réalisée, en particulier le montage des mors ne requiert aucun composant ayant un coût élevé, offre une grande sensibilité et une grande résolution. Par ailleurs il est robuste et est très peu encombrant, il réduit donc peu l'ouverture de la pince, c'est-à-dire l'espace entre les deux membres de la pinces et peut être appliqué à des pinces de très petites dimensions.

Par ailleurs, dans l'exemple représenté, la pince est équipée de deux caméras 40 par exemple de type CCD installées au dessus de la pince, celles-ci permettent de visualiser l'objet à saisir et de mesurer la distance qui le sépare de la pince, grâce à la stéréoscopie. Par ailleurs, est également prévue une barrière optique, comportant une diode électroluminescente émettrice 42 et une diode électroluminescente réceptrice 44 en regard de la diode 42, montées chacune dans un mors 10' de la pince, cette barrière permet de détecter l'objet lorsqu'il arrive entre les deux mors 10', l'objet interrompant alors le faisceau entre les deux diodes 42, 44.

Nous allons maintenant expliquer le fonctionnement de la pince selon la présente invention.

Lorsque l'on souhaite saisir un objet avec la pince selon la présente invention, l'objet est visualisé par les caméras 40 ce qui permet de déplacer la pince, puis, lorsque l'objet se trouve entre les deux mors 10', le faisceau entre les deux diodes 42, 44 est interrompu, la présence de l'objet est détecté.

On actionne la pince de manière à rapprocher les mors 10' de l'objet.

Le capteur 26' détecte lorsqu'un des mors 10' entre en contact avec l'objet. Si un seul des mors 10' entre en contact avec l'objet, les mors 10' sont déplacés de manière à placer l'objet dans une position médiane par rapport aux mors 10', en effet au moment où l'objet va être saisi, il est préférable que les deux mors 10' se trouvent à égale distance des bords de l'objet pour éviter de déplacer l'objet lors de la préhension. La détection de contact qui suit est alors pratiquement simultanée dans chaque mors.

Ensuite, lorsque les deux mors 10' sont en contact avec l'objet, la pince serre l'objet, le contrôle de serrage au moyen du même capteur 26' permet de ne pas détériorer l'objet saisi et ensuite de le déposer plus délicatement, en relâchant progressivement la prise.

**Revendications**

1.  Pince pour robot manipulateur comportant deux membres articulés (4) par une première extrémité, chaque membre (4) comportant à une deuxième extrémité un support de mors (8 , 8') et un mors (10, 10') destiné à venir en contact avec un objet, lesdits mors (10, 10') étant sensiblement plans, un capteur d'effort (26, 26') disposé entre au moins un desdits supports de mors (8, 8') et le mors (10, 10') associé de manière à subir un effort lors du déplacement dudit mors (10, 10'), et une liaison parallélogramme déformable (14, 14') liant ledit mors (10, 10') audit support de mors (8, 8'), le capteur (26, 26') étant orienté de manière à ce qu'un axe sensible du capteur soit orthogonal au plan dudit mors (10, 10').

2.  Pince selon la revendication 1, dans laquelle le parallélogramme (14') est d'une seule pièce.

3.  Pince selon la revendication 2, dans laquelle le support de mors (8') et/ou un plateau (24') formant la base du mors (10') sont réalisés d'une seule pièce avec le parallélogramme (14').

4.  Pince selon l'une des revendications 1 à 3, dans laquelle le parallélogramme comporte des bielles parallèles articulées sur le support de mors et le mors.

5.  Pince selon la revendication 4 en combinaison avec la revendication 2 ou 3, dans laquelle les bielles (16') sont en forme de lames reliées par leurs extrémités (16.1', 16.2') au support de mors (8') et au mors (10'), les extrémités (16.1', 16.2') des lames étant amincies pour permettre l'articulation par rapport au support de mors (8') et au mors (10').

6.  Pince selon l'une des revendications 1 à 5, dans laquelle le capteur (26, 26') est préchargé.

7.  Pince selon la revendication 6, dans laquelle le capteur (26) est en contact avec le parallélogramme (24) et la précharge est obtenue au moyen d'un ressort (30) tendu entre une bielle (16) du parallélogramme (14) et le support de mors (8).

8.  Pince selon la revendication 6, dans laquelle le capteur (26') est en contact direct avec le mors (10') et la précharge est obtenue au moyen d'une vis de pression (38) montée dans le mors (10') en regard du capteur (26').

9.  Pince selon l'une des revendications 1 à 8, dans laquelle une bille (32) est interposée entre le capteur (26') et le mors (10').

10. Pince selon la revendication 9 en combinaison avec la revendication 8, dans laquelle la bille (32) est montée dans le mors (10') en contact avec la vis de pression (38).

11. Pince selon la revendication 9 ou 10, dans laquelle la bille (32) est logée dans une bague (36) en mousse s'interposant entre la bille (32) et le mors (10').

12. Pince selon l'une des revendications 1 à 11, dans laquelle le capteur (26,26') est un capteur de compression mono-axial à jauges de contrainte.

13. Pince selon l'une des revendications 1 à 11, dans laquelle le capteur est du type capacitif, magnétique ou piézoélectrique.

**14.** Pince selon l'une des revendications 1 à 13, comportant au moins une caméra (40) et des moyens pour détecter la présence de l'objet entre les mors, formés par exemple par une diode électroluminescente émettrice (42) fixée dans un mors (10') et une diode électroluminescente réceptrice (44) fixée dans l'autre mors (10') en regard de la première diode (42).

**15.** Pince selon l'une des revendications 1 à 14, dans laquelle les deux mors (10, 10') sont montés sur des liaisons parallélogrammes (14, 14').

**16.** Robot manipulateur comportant au moins une pince selon l'une quelconque des revendications 1 à 15.

**Claims**

**1.** Gripper for a manipulator robot comprising two members (4) articulated at a first end, each member (4) comprising a jaw support (8 , 8') at a second end and a jaw (10, 10') that will come into contact with an object, said jaws (10, 10') being approximately plane, a force sensor (26, 26') arranged between at least one of said jaw supports (8, 8') and an associated jaw (10, 10') so as to apply a force during displacement of said jaw (10, 10'), and a deformable parallelogram connection (14, 14') connecting said jaw (10, 10') to said jaw support (8, 8'), the sensor (26, 26') being oriented such that a sensitive axis of the sensor is orthogonal to the plane of said jaw (10, 10').

**2.** Gripper according to claim 1, in which the parallelogram (14') is a single piece.

**3.** Gripper according to claim 2, in which the jaw support (8') and/or a tray (24') forming the jaw base (10') are made in a single piece with the parallelogram (14').

**4.** Gripper according to one of claims 1 to 3, in which the parallelogram comprises parallel connecting rods articulated on the jaw support and the jaw.

**5.** Gripper according to claim 4 combined with claim 2 or 3, in which the connecting rods (16') are in the form of blades connected at their ends (16.1', 16.2') to the jaw support (8') and to the jaw (10'), the ends (16.1', 16.2') of the blades being thinned to enable articulation relative to the jaw support (8') and the jaw (10').

**6.** Gripper according to one of claims 1 to 5, in which the sensor (26, 26') is preloaded.

**7.** Gripper according to claim 6, in which the sensor (26) is in contact with the parallelogram (24) and the preload is obtained by means of a tight spring (30) between a connecting rod (16) of the parallelogram (14) and the jaw support (8).

**8.** Gripper according to claim 6, in which the sensor (26') is in direct contact with the jaw (10') and the preload is obtained by means of a pressure screw (38) mounted in the jaw (10') facing the sensor (26').

**9.** Gripper according to one of claims 1 to 8, in which a ball (32) is inserted between the sensor (26') and the jaw (10').

**10.** Gripper according to claim 9 combined with claim 8, in which the ball (32) is mounted in the jaw (10') in contact with the pressure screw (38).

**11.** Gripper according to claim 9 or 10, in which the ball (32) is housed in a foam ring (36) inserted between the ball (32) and the jaw (10').

**12.** Gripper according to one of claims 1 to 11, in which the sensor (26,26') is a monoaxial compression sensor with strain gauges.

**13.** Gripper according to one of claims 1 to 11, in which the sensor is of the capacitive, magnetic or piezoelectric type.

**14.** Gripper according to one of claims 1 to 13, comprising at least one camera (40) and means of detecting the presence of the object between the jaws, for example formed by a light emitting diode (42) fixed in a jaw (10') and a receiving light emitting diode (44) fixed in the other jaw (10') facing the first diode (42).

**15.** Gripper according to one of claims 1 to 14, in which the two jaws (10, 10') are fitted on parallelogram connections (14, 14').

**16.** Manipulator robot comprising at least one gripper according to any one of claims 1 to 15.

**Patentansprüche**

**1.** Klemme für einen Roboter-Manipulator, welches zwei jeweils mit einem ersten Ende gelenkig angeordnete Glieder (4) aufweist, deren jedes jeweils an einem zweiten Ende einen KlemmBackenTräger (8, 8') und ein Klemmbacke (10, 10') zum Kontakteingriff mit einem Gegenstand aufweist, wobei die genannten Klemmbacke eben ausgebildet sind und zwischen wenigstens einem der beiden Klemmbackenträger (8, 8') und der zugeordneten Klemmbacke (10, 10') ein Kraftsensor (26, 26') so angeordnet ist, dass er bei einer Verschiebung der Klemmbacke (10, 10') einer Krafteinwirkung unterliegt, und wobei eine verformbare Parallelogramm-Verbindung die Klemmbacke (10, 10') mit dem Klemmbackenträger (8, 8') verbindet, wobei der Sensor (26, 26') so orientiert ist, dass eine empfindliche Ansprechachse des Sensors rechtwinklig zur Ebene der Klemmbacke ist.

**2.** Klemme nach Anspruch 1, bei welchem das Parallelogramm (14') einstückig ausgebildet ist.

**3.** Klemme nach Anspruch 2, bei welchem der Klemmbackenträger (8') und/oder ein die Basis der Klemmbacke (10') bildendes Plateau (24') einstückig mit dem Parallelogramm ausgebildet sind.

**4.** Klemme nach einem der Ansprüche 1 bis 3, bei welchem das Parallelogramm an dem Klemmbackenträger und der Klemmbacke angelenkte parallele Pleuelstangen aufweist.

**5.** Klemme nach Anspruch 4 in Verbindung mit dem Anspruch 2 oder 3, bei welchem die Pleuelstangen (16') in Form dünner Blätter ausgebildet sind, die mit ihren Enden (16.1', 16.2') mit dem Klemmbackenträger (8') und mit der Klemmbacke (10') verbunden sind und bei welchem die Enden (16.1', 16.2') der Blätter verjüngt ausgebildet sind, um die Gelenkverbindung gegenüber dem Klemmbackenträger (8') und der Klemmbacke (10') zu ermöglichen.

**6.** Klemme nach einem der Ansprüche 1 bis 5, bei welchem der Sensor (26, 26') vorgespannt ist.

**7.** Klemme nach Anspruch 8, bei welchem der Sensor (26) in Kontaktberührung mit dem Parallelogramm (24) steht und die Vorspannung mittels einer zwischen einer Pleuelstange (16) des Parallelogramms (14) und dem Klemmbackenträger (8) gespannten Feder (30) aufgebracht wird.

**8.** Klemme nach Anspruch 6, bei welchem der Sensor (26') in direktem Kontakt mit der Klemmbacke (10') steht und die Vorspannung mittels einer in der Klemmbacke (10') in Ausrichtung mit dem Sensor angebrachten Druckschraube (30) aufgebracht wird.

**9.** Klemme nach einem der Ansprüche 1 bis 8, bei welchem eine Kugel (32) zwischen dem Sensor (26'L) und der Klemmbacke zwischengeschaltet ist.

**10.** Klemme nach Anspruch 9 in Verbindung mit dem Anspruch 8, bei welchem die Kugel (32) in der Klemmbacke (10') in Kontaktberührung mit der Druckschraube (38) angeordnet ist.

**11.** Klemme nach Anspruch 9 oder Anspruch 10, bei welchem die Kugel (32) in einem zwischen der Kugel (32) und der Backe (10') zwischengeschalteten Schaumstoffring untergebracht ist.

**12.** Klemme nach einem der Ansprüche 1 bis 11, bei welchem der Sensor (26, 26') ein mono-axialer Kompressions-Sensor mit Dehnungsmeßstreifen ist.

**13.** Klemme nach einem der Ansprüche 1 bis 11, bei welchem der Sensor von kapazitivem, magnetischem oder piezoelektrischem Typ ist.

**14.** Klemme nach einem der Ansprüche 1 bis 13, welches wenigstens eine Kamera (40) und Mittel zur Detektion des Vorliegens des Gegenstands zwischen seinen Klemmbacken umfaßt, die beispielsweise durch eine in einer Klemmbacke (10') angeordnete Elektrolumineszenz-Emitterdiode (42) und eine Elektrolumineszenz-Empfängerdiode (44) gebildet werden, die in der anderen Klemmbacke (10') in Ausrichtung mit der ersten Diode angeordnet ist.

15. Klemme nach einem der Ansprüche 1 bis 14, bei welchem die beiden Klemmbacke (10, 10') auf Parallelogramm-Verbindungen (14, 14') angeordnet sind.

16. Roboter-Manipulator, welcher wenigstens eine Klemme gemäß einem der Ansprüche 1 bis 15 umfaßt.

FIG. 1A

FIG. 1B

# FIG. 2A

# FIG. 2B

302

304

304

# FIG. 3A

311

304

314

306

312

# FIG. 3B

FIG. 4

FIG. 5

FIG. 6

FIG. 7

FIG. 8

FIG. 9

FIG. 10

FIG. 11

FIG. 12

**EP 2 164 685 B1**

## RÉFÉRENCES CITÉES DANS LA DESCRIPTION

**Documents brevets cités dans la description**

- EP 0974421 A
- JP 01210285 A